(19)

Europäisches
Patentamt
European
Patent Office
Office européen
des brevets

(11) **EP 3 940 623 A2**

(12) **EUROPEAN PATENT APPLICATION**

(43) Date of publication:
**19.01.2022  Bulletin 2022/03**

(21) Application number: **21164394.5**

(22) Date of filing: **23.03.2021**

(51) International Patent Classification (IPC):
**G06Q 50/26** $^{(2012.01)}$      **G06Q 30/02** $^{(2012.01)}$

(52) Cooperative Patent Classification (CPC):
**G06Q 50/26; G06Q 30/0201**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **30.04.2020  CN 202010360887**

(71) Applicant: **Baidu Online Network Technology (Beijing)
Co., Ltd.
Beijing 100085 (CN)**

(72) Inventors:
• **HUANG, Jizhou
  Beijing, Beijing 100085 (CN)**

• **WANG, Haifeng
  Beijing, Beijing 100085 (CN)**
• **FAN, Miao
  Beijing, Beijing 100085 (CN)**
• **XIONG, Haoyi
  Beijing, Beijing 100085 (CN)**
• **ZHUO, An
  Beijing, Beijing 100085 (CN)**
• **LI, Ying
  Beijing, Beijing 100085 (CN)**
• **DOU, Dejing
  Beijing, Beijing 100085 (CN)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54)  **METHODS FOR MONITORING ECONOMIC STATE AND ESTABLISHING ECONOMIC STATE MONITORING MODEL AND CORRESPONDING APPARATUSES**

(57)   The present disclosure discloses methods for monitoring an economic state and establishing an economic state monitoring model and corresponding apparatuses, and relates to the technical field of big data. A specific implementation solution is: acquiring, from map application data, geographic location point active data in a to-be-monitored future time frame and N historical time frames before the to-be-monitored time frame respectively for a to-be-monitored region, the N being a positive integer; and inputting feature vectors of the geographic location point active data in the to-be-monitored time frame and the N historical time frames before the to-be-monitored time frame into a pre-trained economic state monitoring model, to obtain economic indicator data of the to-be-monitored region in the to-be-monitored time frame. The present disclosure can monitor an economic state of the to-be-monitored region in the to-be-monitored time frame in real time, thus timely providing a reference for policy making.

201
Acquire, from map application data, geographic location point active data in a to-be-monitored time frame and N historical time frames before the to-be-monitored time frame respectively for a to-be-monitored region

202
Input feature vectors of the geographic location point active data in the to-be-monitored time frame and N historical time frames before the to-be-monitored time frame into a pre-trained economic state monitoring model, to obtain economic indicator data of the to-be-monitored region in the to-be-monitored time frame

FIG. 2

EP 3 940 623 A2

**Description**

**Field of the Disclosure**

The present disclosure relates to the technical field of computer application, and particularly to the technical field of big data.

**Background of the Disclosure**

GDP (Gross Domestic Product) and CPI (Consumer Price Index) are important indicators to depict economic conditions, and ideally, should be monitored in real time, so that countries or regions can take them as important references when formulating relevant policies. For example, the recent rapid outbreak of COVID-19 has affected the economies of many regions and industries to varying degrees in a short period of time. However, in the course of the outbreak, it is difficult to grasp the macro-economic trend in real time.

An existing method for acquiring an economic state can only be based on statistics, such as statistics on actual economic indicators of each quarter. However, this statistical method can only obtain economic conditions of previous periods with a lag, but cannot timely provide a reference for policy making.

**Summary of the Disclosure**

In view of this, the present disclosure provides the following technical solutions to timely monitor an economic state and solves the above problems caused by lagging statistical methods.

In a first aspect, the present disclosure provides a method for monitoring an economic state, the method comprising:

acquiring, from map application data, geographic location point active data in a to-be-monitored future time frame and N historical time frames before the to-be-monitored time frame respectively for a to-be-monitored region, the N being a positive integer; and

inputting feature vectors of the geographic location point active data in the to-be-monitored time frame and the N historical time frames before the to-be-monitored time frame into a pre-trained economic state monitoring model, to obtain economic indicator data of the to-be-monitored region in the to-be-monitored time frame.

In a second aspect, the present disclosure provides a method for establishing an economic state monitoring model, the method comprising:

acquiring, from map application data, geographic location point active data in M consecutive time frames respectively for a to-be-monitored region; and acquiring, from an economic indicator database, actual economic indicator data of the to-be-monitored region in the M time frames respectively, the M being a positive integer greater than 1, the M>N; and

training a time series model by taking the acquired geographic location point active data and actual economic indicator data in the M consecutive time frames as training data, to obtain an economic state monitoring model for the to-be-monitored region;

the economic state monitoring model being configured to output, according to geographic location point active data of the to-be-monitored region in a to-be-monitored future time frame and N historical time frames before the to-be-monitored time frame, economic indicator data of to-be-monitored region in the to-be-monitored time frame, the N being a positive integer.

In a third aspect, the present disclosure provides an apparatus for monitoring an economic state, the apparatus comprising:

a data acquisition unit configured to acquire, from map application data, geographic location point active data in a to-be-monitored future time frame and N historical time frames before the to-be-monitored time frame respectively for a to-be-monitored region, the N being a positive integer; and

a monitoring processing unit configured to input feature vectors of the geographic location point active data in the to-be-monitored time frame and the N historical time frames before the to-be-monitored time frame into a pre-trained economic state monitoring model, to obtain economic indicator data of the to-be-monitored region in the to-be-monitored time frame.

In a fourth aspect, the present disclosure further provides an apparatus for establishing an economic state monitoring model, the apparatus comprising:

a data acquisition unit configured to acquire, from map application data, geographic location point active data in M consecutive time frames respectively for a to-be-monitored region; and acquire, from an economic indicator database, actual economic indicator data of the to-be-monitored region in the M time frames respectively, the M being a positive integer greater than 1, the M>N; and
a model training unit configured to train a time series model by taking the acquired geographic location point active data and actual economic indicator data in the M consecutive time frames as training data, to obtain an economic state monitoring model for the to-be-monitored region;
the economic state monitoring model being configured to output, according to geographic location point active data of the to-be-monitored region in a to-be-monitored future time frame and N historical time frames before the to-be-monitored time frame, economic indicator data of to-be-monitored region in the to-be-monitored time frame, the N being a positive integer.

In a fifth aspect, the present disclosure further provides an electronic device, comprising:

at least one processor; and
a memory in a communication connection with the at least one processor, wherein
the memory stores instructions executable by the at least one processor, and the instructions are executed by the at least one processor to enable the at least one processor to perform any of the methods described above.

In a sixth aspect, the present disclosure further provides a non-transitory computer-readable memory medium that stores computer instructions, wherein the computer instructions are used to make the computer perform any of the methods described above.

In a seventh aspect, the present disclosure further provides a computer program product comprising instructions which, when the program is executed by a computer, cause the computer to perform any of the methods described above.

It can be seen from the above technical solutions that the present disclosure can monitor, according to geographic location point active data of a to-be-monitored region in a to-be-monitored time frame and historical time frames before the to-be-monitored time frame, an economic state of the to-be-monitored region in a to-be-monitored future time frame in real time, thus timely providing a reference for policy making.

Other effects of the above optional manners will be explained below in combination with specific embodiments.

**Brief Description of Drawings**

The accompanying drawings are intended to better understand the solutions and do not limit the present disclosure. In the drawings,

Fig. 1 is a diagram of time distribution of quarterly GDP, $V^3$ and NVC according to an embodiment of the present disclosure;
Fig. 2 is a flow chart of a method for monitoring an economic state according to Embodiment 1 of the present disclosure;
Fig. 3 is a schematic structural diagram of an economic state monitoring model according to Embodiment 1 of the present disclosure;
Fig. 4 is a flow chart of a method for establishing an economic state monitoring model according to Embodiment 2 of the present disclosure;
Fig. 5 is a schematic diagram of training of the economic state monitoring model according to Embodiment 2 of the present disclosure;
Fig. 6 is a structural diagram of an apparatus for monitoring an economic state according to Embodiment 3 of the present disclosure;
Fig. 7 is a structural diagram of establishment of an economic state monitoring model according to Embodiment 4 of the present disclosure; and
Fig. 8 is a block diagram of an electronic device for implementing an embodiment of the present disclosure.

**Detailed Description of Preferred Embodiments**

Exemplary embodiments of the present disclosure are described below with reference to the accompanying drawings, including various details of the embodiments of the present disclosure to facilitate understanding, and they should be considered as exemplary only. Therefore, those of ordinary skill in the art should be aware that the embodiments described here may be changed and modified in various ways without deviating from the scope and spirit of the present disclosure. Similarly, for the sake of clarity and simplicity, descriptions of well-known functions and structures are omitted in the following description.

After long-term observation and research, it is found that geographic location point active data in the same time interval is obtained from map applications and economic indicator data in the same time interval in the same region is obtained from an economic indicator database. After statistical analysis and comparison, it is found that there is a strong correlation between time distribution of the geographic location point active data and time distribution of the economic indicator data.

For example, statistics is conducted quarterly on the total volume of data of Chinese mainland users' visits to stores in each of nine quarters from the first quarter in 2018 to the first quarter in 2020, denoted as $V^3$ (Volumes of Visits to Venue), on the total number of new stores per quarter registered by Chinese mainland merchants, denoted as NVC (New Venues Created), and on Chinese mainland's real GDP gross per quarter.

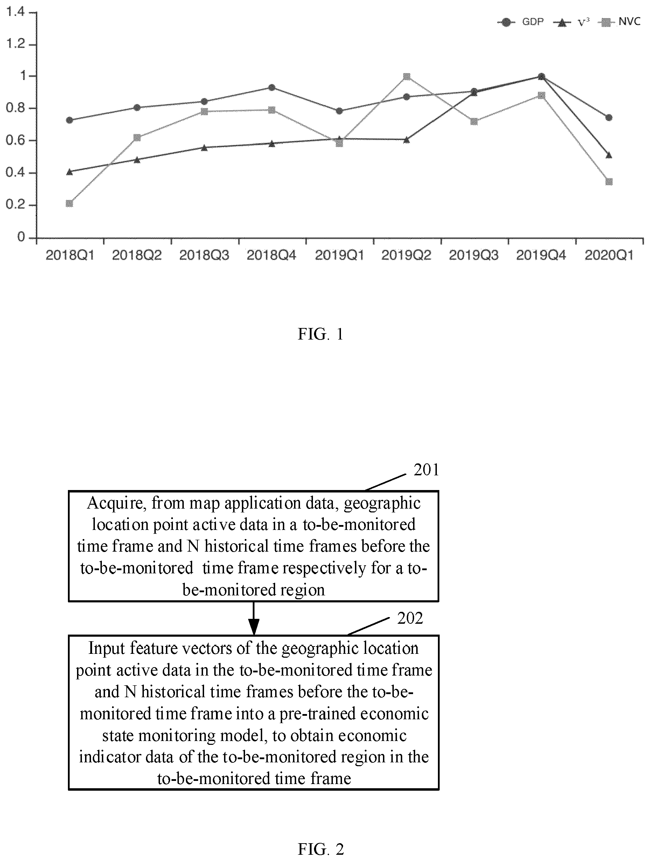

Three sets of data are thus obtained: quarterly GDP, quarterly $V^3$ and quarterly NVC. There are 9 points in each set of data. After all values are normalized, a diagram of time distribution as shown in Fig. 1 is obtained. In Fig. 1, Q1 to Q4 on the horizontal axis refer to the first quarter to the fourth quarter respectively, and the vertical axis represents values of the normalized quarterly GDP, quarterly $V^3$ and quarterly NVC. As can be seen from the figure, there is a strong correlation between GDP and NVC. Through Pearson Correlation Coefficient analysis, a correlation coefficient between GDP and $V^3$ is 81.41%, and a correlation coefficient between GDP and NVC is 82.11%, presenting a strong positive correlation.

Based on the above theory, the core idea of the present disclosure is to use geographic location point active data in map application data to monitor economic state data in a corresponding time frame. The methods provided in the present disclosure are described in detail below with reference to embodiments.

Embodiment 1

Fig. 2 is a flow chart of a method for monitoring an economic state according to Embodiment 1 of the present disclosure. An apparatus performing the method may be a computer device or server that may obtain data maintained by map applications from a map server. Economic indicator data monitored by performing the method may be displayed on the computer device or server, or output to other devices for display. As shown in Fig. 2, the method may include the following steps:

In 201, geographic location point active data in a to-be-monitored time frame and N historical time frames before the to-be-monitored time frame is acquired from map application data respectively for a to-be-monitored region, the N being a positive integer.

The "geographic location point" in the present disclosure refers to geographic location points in the map application data, which may be searched and browsed by users and recommended to the users, etc. The geographic location points have basic attributes such as latitude and longitude, name, administrative address, and type. The geographic location points may include, but are not limited to, POI (Point Of Interest), AOI (Area Of Interest), ROI (Region Of Interest), etc.

The geographic location point active data refers to data that reflects geographic location points being in an active state, and mainly includes: data of users' access to commercial geographic location points, data of newly added commercial geographic location points, data of the users' query of the commercial geographic location points and data of valid commercial geographic location points. Since the commercial geographic location points are more closely related to economic behaviors, active data related to the commercial geographic location points are mainly used in the present disclosure. The commercial geographic location points may be geographic location points with physical stores, such as shopping malls, supermarkets, shops, banks, companies, hotels, and scenic spots. In addition, active data related to non-commercial geographic location points may also be added, such as data related to hospitals and schools.

The data of users' access to commercial geographic location points may include information such as the number of times, time, duration, and frequency of users' visits to commercial physical stores.

The data of newly added commercial geographic location points may be, for example, the number and time of new stores.

The data of the users' query of the commercial geographic location points may include information such as the number of times, time, and frequency of the users' query of the commercial geographic location points on map applications.

The data of valid commercial geographic location points may be information such as the number and positions of commercial geographic location points in a valid state maintained by the map applications. The so-called valid state means that the geographic location points are open as usual and can be accessed as usual.

The to-be-monitored region in the present disclosure may be divided according to administrative divisions or geographical regions. However, as monitoring and planning of an economic state is usually carried out according to administrative divisions, it is preferable to divide the to-be-monitored region according to administrative divisions. For example, the to-be-monitored region may be a country, a province, a city, and so on.

In addition, an objective of the embodiment of the present disclosure is to monitor an economic condition of a to-be-monitored region in a to-be-monitored time frame by using geographic location point active data in the to-be-monitored time frame and historical time frames before the to-be-monitored time frame. The duration of the historical time frames may be a preset value. For example, if an economic state of a province in the current year is predicted, geographic location point active data of the province in the current year and the previous 9 years (10 years in total) can be used. For another example, if an economic state of a province in the current month is predicted, geographic location point active data of the province in the current month and the previous nine months (10 months in total) can be used, and so on.

In 202, feature vectors of the geographic location point active data in the to-be-monitored time frame and the N historical time frames before the to-be-monitored time frame are inputted into a pre-trained economic state monitoring model, to obtain economic indicator data of the to-be-monitored region in the to-be-monitored time frame.

In this step, feature vectors of the geographic location point active data in the to-be-monitored time frame and the historical time frames are determined respectively, that is, N+1 feature vectors are determined. Assuming that the to-be-monitored time frame is expressed as $t$, a feature vector of the geographic location point active data in the to-be-monitored time frame is expressed as $x_t$, and feature vectors of the geographic location point active data in previous N historical time frames are expressed as $x_{t-N}$, ... and $x_{t-1}$ respectively, $x_{t-N}$, ..., $x_{t-1}$ and $x_t$ are inputted to the economic state monitoring model.

The feature vectors of the geographic location point active data may include various types of geographic location point active data, which may be integrated into a form of vector for representation.

The economic state monitoring model in the embodiment of the present disclosure uses a time series model to pre-establish a strong correlation between time distribution of the geographic location point active data and time distribution of the economic indicator data. The training process of the economic state monitoring model will be subsequently described in detail through Embodiment 2.

The economic indicator data outputted by the economic state monitoring model may include at least one of the following: GDP, PMI (Purchasing Managers Index) and CPI, which may be outputted in the form of vectors. Assuming that the to-be-monitored time frame is expressed as $t$, a vector of the economic indicator data of the to-be-monitored time frame is expressed as $y_t$.

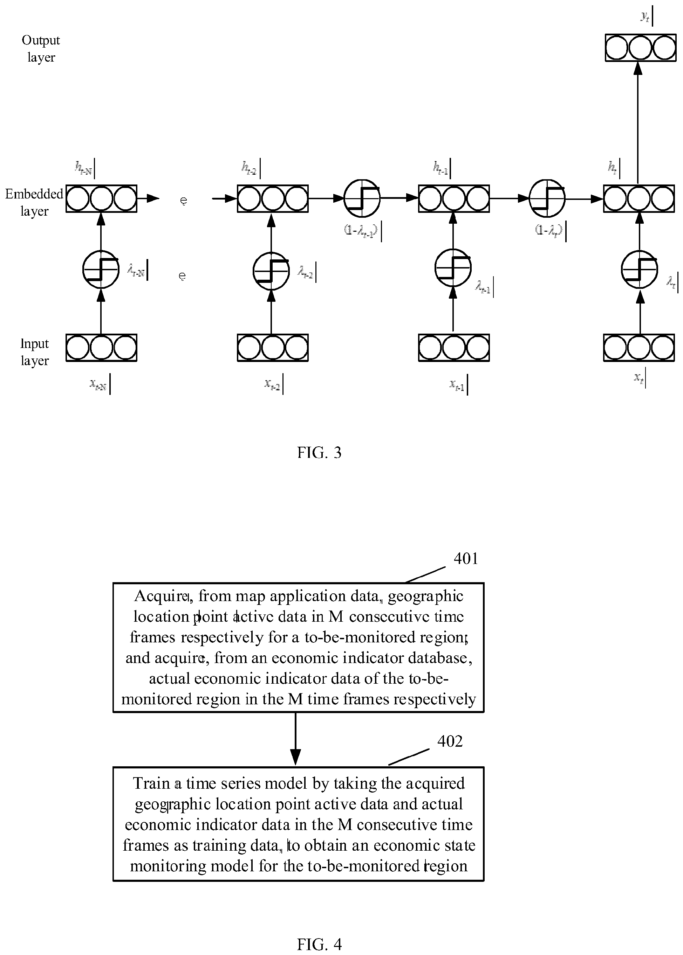

A structure of an economic state monitoring model provided in the present embodiment is described in detail below. As shown in Fig. 3, the economic state monitoring model may include: an input layer, an embedded layer and a prediction layer.

The input layer is configured to output representations of the feature vectors of the geographic location point active data in the to-be-monitored time frame and the N historical time frames before the to-be-monitored time frame to the embedded layer. As shown in Fig. 3, $x_{t-N}$, ..., $x_{t-1}$ and $x_t$ are inputted to the embedded layer.

The embedded layer is configured to weight an inputted feature vector $x_i$ of geographic location point active data in the $i^{th}$ time frame and an embedded layer vector $h_{i-1}$ corresponding to the it-$1^{th}$ time frame to obtain an embedded layer vector $h_i$ corresponding to the $i^{th}$ time frame, wherein the $i^{th}$ time frame is sequentially taken from the time periods from the N historical time frames before the to-be-monitored time frame to the to-be-monitored time frame.

In the embedded layer, embedded layer vectors are calculated for the inputted feature vectors of the time frames respectively according to a time series. In addition to being correlated with the inputted vector $x_i$ of the time frame, an embedded layer vector corresponding to a time frame i is further correlated with the embedded layer vector $h_{i-1}$ of the previolus time frame $i$-1. A specific calculation manner may be:

$$h_i = h_{i-1}\left(1 - \lambda_i\right) + U^{l \times k} x_i\, \lambda_i \qquad (1)$$

where $U^{l \times k}$ is a parameter array, for transforming $x_i$ to be dimensionally consistent with the embedded layer vector, $k$ is the dimension of $x_i$, and $l$ is the dimension of the embedded layer vector. $\lambda_i$ is a weighting coefficient, which is correlated with the inputted feature vector $x_i$, and may employ the following formula:

$$\lambda_i = \log\left(\frac{1}{1 + \exp{-(w^T x_i + b)}}\right) \qquad (2)$$

where $w$ is a $k$-dimension parameter vector, and $b$ is a scalar. $\lambda_i \in (0, 1)$, which is a scalar.

The embedded layer sequentially calculates a corresponding embedded layer vector for each time frame according to a time series.

The prediction layer is configured to obtain the economic indicator data in the to-be-monitored time frame by mapping according to the embedded layer vector corresponding to the to-be-monitored time frame.

As shown in Fig. 3, if the to-be-monitored time frame is expressed as $t$, the vector representation $y_t$ of the economic indicator data of the to-be-monitored time frame may be obtained from the following formula:

$$y_t = V h_t \qquad (3)$$

where the vector dimension of $y_t$ is m, and the dimension of the parameter matrix $V$ is $m \times l$.

$U^{l \times k}$, $V$, $w$ and $b$ are all model parameters of the economic state monitoring model, and are obtained by pre-training during model training.

In addition, when the economic state of the to-be-monitored region in the to-be-monitored time frame is predicted, the to-be-monitored region may also be divided according to the industry. For example, if an economic state of an industry in the to-be-monitored region in the to-be-monitored time frame is predicted, geographic location point active data related to the industry is acquired during acquisition of the geographic location point active data. That is to say, geographic location point types can be associated with industries. For example, when an economic state of a tourism industry is predicted, geographic location point active data of types such as hotels, guesthouses, and scenic spots may be acquired. For example, when an economic state of a retail industry is predicted, geographic location point active data of types such as shopping malls, supermarkets and convenience stores may be acquired.

The following application scenarios may be implemented in the manner provided in the present embodiment:

Scenario 1:

It is currently April 2020. Geographic location point active data such as V³ data and NVC data of a province from July 2019 to April 2020, NVC data is collected and inputted into an economic state monitoring model pre-established for the province, a GDP indicator of the province in April 2020 can be obtained in real time. It is unnecessary to acquire the GDP indicator with a lag by economic data statistics after April.

Scenario 2:

It is currently April 2020. GDP produced by the tourism industry all over China in April 2020 can be obtained in real time by collecting V³ data and NVC data in categories such as hotels, guesthouses, scenic spots and restaurants from July 2019 to April 2020 and inputting the data into an economic state monitoring model pre-established for the whole of China.

Embodiment 2

Fig. 4 is a flow chart of a method for establishing an economic state monitoring model according to Embodiment 2 of the present disclosure. As shown in Fig. 4, the method may include the following steps:

In 401, geographic location point active data in M consecutive time frames are acquired from map application data respectively for a to-be-monitored region; and actual economic indicator data of the to-be-monitored region in the M time frames are acquired from an economic indicator database respectively, the M being a positive integer greater than 1, the M>N.

Since the economic state monitoring model is established for a specific region, to-be-monitored geographic location point active data and actual economic indicator data need to be acquired to serve as training data during training data acquisition.

The map application data may be acquired or called from a map application server or database. The actual economic indicator data may be acquired from an economic indicator database in which actual economic indicator data of each region in each time frame is recorded. The actual economic indicator data may be actual data obtained based on economic data statistics.

Similar to that in Embodiment 1, the geographic location point active data refers to data that reflects geographic location points being in an active state, and mainly includes: data of users' access to commercial geographic location points, data of newly added commercial geographic location points, data of the users' query of the commercial geographic location points and data of valid commercial geographic location points.

The economic indicator data outputted by the economic state monitoring model may include at least one of the following: GDP, PMI and CPI.

The to-be-monitored region in the present disclosure may be divided according to administrative divisions or geographical regions. However, as monitoring and planning of an economic state is usually carried out according to administrative divisions, it is preferable to divide the to-be-monitored region according to administrative divisions. For example, the to-be-monitored region may be a country, a province, a city, and so on.

During actual use, types of geographic location point active data and economic indicator data used in establishment of a model need to be consistent with types of geographic location point active data and economic indicator data used in monitoring with the model. A region for which the model is established also needs to be consistent with a region for which the monitoring is performed.

For example, $V^3$ data, NVC data and GDP data from January to October 2018 throughout the country are taken as one piece of training data, $V^3$ data, NVC data and GDP data from February to November 2018 throughout the country are taken as one piece of training data, $V^3$ data, NVC data and GDP data from March to December 2018 throughout the country are taken as one piece of training data, and so on. A plurality of pieces of training data can be constructed.

In 402, a time series model is trained by taking the acquired geographic location point active data and actual economic indicator data in the M consecutive time frames as training data, to obtain an economic state monitoring model for the to-be-monitored region.

The training process is actually a training process during which the economic state monitoring model learns a strong correlation between time distribution of the geographic location point active data and time distribution of the economic indicator data.

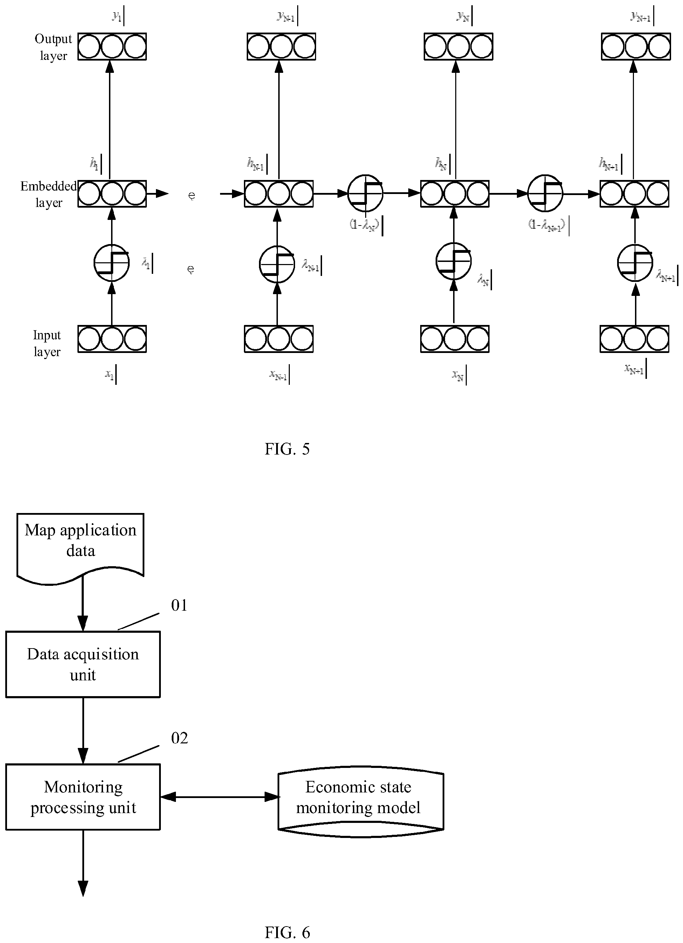

Similarly, as shown in Fig. 5, the time series model employed by the economic state monitoring model may include: an input layer, an embedded layer and a prediction layer.

The input layer is configured to output feature vectors of the geographic location point active data in the time frames in the training data to the embedded layer.

In the training of the economic state monitoring model, the number of time frames used in the training data needs to be consistent with the number of time frames used in the prediction with the model. If the prediction described in Embodiment 1 is to be achieved, the number of time frames for each training sample is N+1. That is, geographic location point active data and actual economic indicator data inl each N+1 consecutive time frames are taken as a training sample. As shown in Fig. 5, the first to $N+1^{th}$ inputted feature vectors for N+1 time frames may be expressed as $x_1$, ..., $x_N$ and $x_{N+1}$ respectively and outputted to the embedded layer according to a time series.

The embedded layer is configured to weight an inputted feature vector $x_i$| of geographic location point active data in the $i^{th}$ time frame and an embedded layer vector $h_{i-1}$| corresponding to the $i\text{-}1^{th}$ time frame to obtain an embedded layer vector $h_i$| corresponding to the $i^{th}$ time frame, wherein the $i^{th}$ time frame is sequentially taken from the time frames in the training data in chronological order.

Calculation methods for $h_i$| and $\lambda_i$| may be obtained with reference to the formula (1) and the formula (2) in Embodiment 1, which are not described in detail here.

For each time frame, a corresponding embedded layer vector can be calculated and outputted to the prediction layer.

The prediction layer is configured to obtain economic indicator data of the $i^{th}$ time frame by mapping according to the embedded layer vector $h_i$| corresponding to the $i^{th}$ time frame.

In the prediction layer, corresponding economic indicator data may be calculated corresponding to each time frame, for example, economic indicator data $y_i$ in the $i^{th}$ time frame may be obtained by using the following formula:

$$y_i = V h_i \qquad (4)$$

where the meaning of $V$ is the same as that of $V$ in the formula (3) in Embodiment 1, which is not described in detail.

After calculation, the economic indicator data predicted by the prediction layer can be calculated for each time frame, and the actual economic indicator data is available for each time frame in the training data. Therefore, during model training, a difference between the economic indicator data obtained by the prediction layer and the corresponding actual economic indicator data in the training data can be minimized.

A loss function may be constructed by using the above difference, and model parameters are optimized by using the value of the loss function. The model parameters involved include $U^{l \times k}$|, $V$, $w$ and $b$. Specifically, the prediction layer may output the economic indicator data predicted for each time frame, that is, a loss function is available for each time frame, and the model parameters are optimized by using the value of the loss function for each time frame. After the training, the economic state monitoring model as shown in Fig. 3 can be obtained.

The above is detailed description of the methods provided in the present disclosure. The apparatuses provided in the present disclosure are described in detail below with reference to embodiments.

Embodiment 3

Fig. 6 is a structural diagram of an apparatus for monitoring an economic state according to Embodiment 3 of the present disclosure. The apparatus may be located in an application of a computer device, or a functional unit such as a plug-in or Software Development Kit (SDK) in the application of the computer device, or located in a server, which is not specifically limited in the embodiment of the present disclosure. The apparatus includes: a data acquisition unit 01 and a monitoring processing unit 02. Main functions of various component units are as follows:
The data acquisition unit 01 is configured to acquire, from map application data; geographic location point active data in a to-be-monitored time frame and N historical time frames before the to-be-monitored time frame respectively for a to-be-monitored region, the N being a positive integer.

The monitoring processing unit 02 is configured to input feature vectors of the geographic location point active data in the to-be-monitored time frame and the N historical time frames before the to-be-monitored time frame into a pre-trained economic state monitoring model, to obtain economic indicator data of the to-be-monitored region in the to-be-monitored time frame.

The economic state monitoring model uses a time series model to establish a strong correlation between time distribution of the geographic location point active data and time distribution of the economic indicator data.

Specifically, the economic state monitoring model includes: an input layer, an embedded layer and a prediction layer.

The input layer is configured to output representations of the feature vectors of the geographic location point active data in the to-be-monitored time frame and the N historical time frames before the to-be-monitored time frame to the embedded layer.

The embedded layer is configured to weight an inputted feature vector $x_i|$ of geographic location point active data in the $i^{th}$ time frame and an embedded layer vector $h_{i-1}|$ corresponding to the $i\text{-}1^{th}$ time frame to obtain an embedded layer vector $h_i|$ corresponding to the $i^{th}$ time frame, wherein the $i^{th}$ time frame is sequentially taken from the time periods from the N historical time frames before the to-be-monitored time frame to the to-be-monitored time frame.

The prediction layer is configured to obtain the economic indicator data in the to-be-monitored time frame by mapping according to the embedded layer vector corresponding to the to-be-monitored time frame.

The geographic location point active data includes at least one of the following: data of users' access to commercial geographic location points, data of newly added commercial geographic location points, data of the users' query of the commercial geographic location points and data of valid commercial geographic location points.

The economic indicator data includes at least one of the following: GDP, PMI and CPI.

When the apparatus predicts the economic state of the to-be-monitored region in the to-be-monitored time frame, the to-be-monitored region may also be divided according to the industry. For example, if an economic state of an industry in the to-be-monitored region in the to-be-monitored time frame is predicted, the data acquisition unit 01 acquires geographic location point active data related to the industry when acquiring the geographic location point active data. That is to say, geographic location point types can be associated with industries. For example, when an economic state of a tourism industry is predicted, geographic location point active data of types such as hotels, guesthouses, and scenic spots may be acquired. For example, when an economic state of a retail industry is predicted, geographic location point active data of types such as shopping malls, supermarkets and convenience stores may be acquired.

Embodiment 4

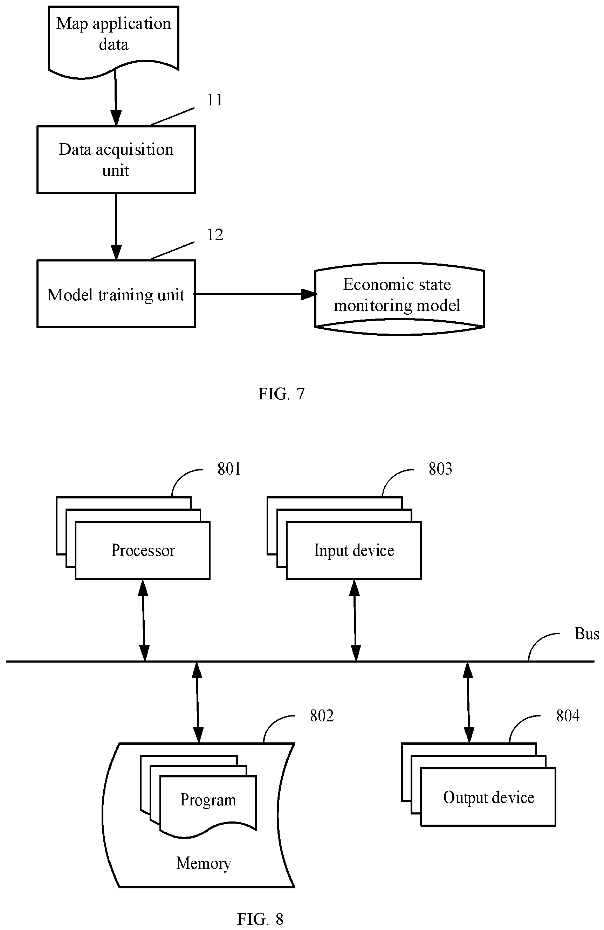

Fig. 7 is a structural diagram of establishment of an economic state monitoring model according to Embodiment 4 of the present disclosure. The apparatus may be located in an application of a computer device, or a functional unit such as a plug-in or Software Development Kit (SDK) in the application of the computer device, or located in a server, which is not specifically limited in the embodiment of the present disclosure. The apparatus includes: a data acquisition unit 11 and a model training unit 12. Main functions of various component units are as follows:
The data acquisition unit 11 is configured to acquire, from map application data, geographic location point active data in M consecutive time frames respectively for a to-be-monitored region; and acquire, from an economic indicator database, actual economic indicator data of the to-be-monitored region in the M time frames respectively, the M being a positive integer greater than 1.

The model training unit 12 is configured to train a time series model by taking the acquired geographic location point active data and actual economic indicator data in the M consecutive time frames as training data, to obtain an economic state monitoring model for the to-be-monitored region.

The economic state monitoring model is configured to output, according to geographic location point active data of the to-be-monitored region in a to-be-monitored future time frame and N historical time frames before the to-be-monitored time frame, economic indicator data of to-be-monitored region in the to-be-monitored time frame, the N being a positive integer, the M>N.

The economic state monitoring model learns a strong correlation between time distribution of geographic location point active data and time distribution of economic indicator data during the training.

Specifically, the economic state monitoring model may include: an input layer, an embedded layer and a prediction layer.

The input layer is configured to output feature vectors of the geographic location point active data in the time frames in the training data to the embedded layer.

The embedded layer is configured to weight an inputted feature vector $x_i$ of geographic location point active data in the $i^{th}$ time frame and an embedded layer vector $h_{i-1}$ corresponding to the $i\text{-}1^{th}$ time frame to obtain an embedded layer vector $h_i$ corresponding to the $i^{th}$ time frame, wherein the $i^{th}$ time frame is sequentially taken from the time frames in the training data in chronological order.

The prediction layer is configured to obtain economic indicator data of the $i^{th}$ time frame by mapping according to the embedded layer vector $h_i$ corresponding to the $i^{th}$ time frame.

A training goal of the economic state monitoring model is to minimize a difference between the economic indicator data obtained by the prediction layer and the corresponding actual economic indicator data in the training data.

In the prediction layer, corresponding economic indicator data may be calculated corresponding to each time frame. The actual economic indicator data is available for each time frame in the training data. The prediction layer may output the economic indicator data predicted for each time frame, that is, a loss function is available for each time frame, and model parameters are optimized by using the value of the loss function for each time frame. After the training, the economic state monitoring model as shown in Fig. 3 can be obtained.

The geographic location point active data includes at least one of the following: data of users accessing commercial geographic location points, data of newly added commercial geographic location points, data of users inquiring commercial geographic location points and data of valid commercial geographic location points.

The economic indicator data includes at least one of the following: GDP, PMI and CPI.

According to an embodiment of the present disclosure, the present disclosure further provides an electronic device and a readable storage medium.

As shown in Fig. 8, it is a block diagram of an electronic device of methods for monitoring an economic state and establishing an economic state monitoring model according to an embodiment of the present disclosure. The electronic device is intended to represent various forms of digital computers, such as laptops, desktops, workbenches, personal digital assistants, servers, blade servers, mainframe computers and other suitable computers. The electronic device may further represent various forms of mobile devices, such as personal digital assistant, cellular phones, smart phones, wearable devices and other similar computing devices. The components, their connections and relationships, and their functions shown herein are examples only, and are not intended to limit the implementation of the present disclosure as described and/or required herein.

As shown in Fig. 8, the electronic device includes: one or more processors 801, a memory 802, and interfaces for connecting various components, including high-speed and low-speed interfaces. The components are connected to each other by using different buses and may be mounted on a common motherboard or otherwise as required. The processor may process instructions executed in the electronic device, including instructions stored in the memory or on the memory to display graphical information of a GUI on an external input/output device (such as a display device coupled to the interfaces). In other implementation modes, multiple processors and/or buses may be used together with multiple memories, if necessary. Similarly, multiple electronic devices may be connected, each of which provides some necessary operations (for example, as a server array, a set of blade servers, or a multiprocessor system). One processor 801 is taken as an example is Fig. 8.

The memory 802 is the non-transitory computer-readable storage medium provided in the present disclosure. The memory stores instructions executable by at least one processor to make the at least one processor perform the methods for monitoring an economic state and establishing an economic state monitoring model provided in the present disclosure. The non-transitory computer-readable storage medium in the present disclosure stores computer instructions. The computer instructions are used to make a computer perform the methods for monitoring an economic state and establishing an economic state monitoring model provided in the present disclosure.

The memory 802, as a non-transitory computer-readable storage medium, may be configured to store non-transitory software programs, non-transitory computer executable programs and modules, for example, program instructions/modules corresponding to the methods for monitoring an economic state and establishing an economic state monitoring model provided in the present disclosure. The processor 801 runs the non-transitory software programs, instructions and modules stored in the memory 802 to execute various functional applications and data processing of a server, that is, to implement the methods for monitoring an economic state and establishing an economic state monitoring model in the above method embodiments.

The memory 802 may include a program storage area and a data storage area. The program storage area may store an operating system and an application required by at least one function; and the data storage area may store data created according to use of the electronic device. In addition, the memory 802 may include a high-speed random access memory, and may further include a non-transitory memory, for example, at least one disk storage device, a flash memory device, or other non-transitory solid-state storage devices. In some embodiments, the memory 802 optionally includes memories remotely disposed relative to the processor 801. The remote memories may be connected to the electronic device over a network. Examples of the network include, but are not limited to, the Internet, intranets, local area networks, mobile communication networks and combinations thereof.

The electronic device may further include: an input device 803 and an output device 804. The processor 801, the memory 802, the input device 803 and the output device 804 may be connected through a bus or in other manners. In Fig. 8, the connection through a bus is taken as an example.

The input device 803 may receive input numerical information or character information, and generate key signal input related to user setting and function control of the electronic device, for example, input devices such as a touch screen, a keypad, a mouse, a trackpad, a touch pad, a pointer, one or more mouse buttons, a trackball, and a joystick. The output device 804 may include a display device, an auxiliary lighting device (e.g., an LED) and a tactile feedback device (e.g., a vibration motor). The display device may include, but is not limited to, a liquid crystal display (LCD), a light-emitting diode (LED) display and a plasma display. In some implementation modes, the display device may be a touch screen.

Various implementation modes of the systems and technologies described here can be implemented in a digital electronic circuit system, an integrated circuit system, an ASIC (application-specific integrated circuit), computer hardware, firmware, software, and/or combinations thereof. The various implementation modes may include: being implemented in one or more computer programs, wherein the one or more computer programs may be executed and/or interpreted on a programmable system including at least one programmable processor, and the programmable processor may be a special-purpose or general-purpose programmable processor, receive data and instructions from a storage system, at least one input device and at least one output device, and transmit the data and the instructions to the storage system, the at least one input device and the at least one output device.

The computing programs (also referred to as programs, software, software applications, or code) include machine instructions for programmable processors, and may be implemented by using high-level procedural and/or object-oriented programming languages, and/or assembly/machine languages. As used herein, the terms "machine-readable medium" and "computer-readable medium" refer to any computer program product, device, and/or apparatus (e.g., a magnetic disk, an optical disc, a memory, and a programmable logic device (PLD)) configured to provide machine instructions and/or data to a programmable processor, including a machine-readable medium that receives machine instructions serving as machine-readable signals. The term "machine-readable signal" refers to any signal for providing the machine instructions and/or data to the programmable processor.

To provide interaction with a user, the systems and technologies described here can be implemented on a computer. The computer has: a display device (e.g., a CRT (cathode-ray tube) or an LCD (liquid crystal display) monitor) for displaying information to the user; and a keyboard and pointing device (e.g., a mouse or trackball) through which the user may provide input for the computer. Other kinds of apparatuses may also be configured to provide interaction with the user. For example, a feedback provided for the user may be any form of sensory feedback (for example, visual, auditory, or tactile feedback); and input from the user may be received in any form (including sound input, voice input, or tactile input).

The systems and technologies described here can be implemented in a computing system including background components (for example, as a data server), or a computing system including middleware components (for example, an application server), or a computing system including front-end components (for example, a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (for example, a communication network). Examples of the communication network include: a local area network (LAN), a wide area network (WAN), and the Internet.

The computer system may include a client and a server. The client and the server are generally far away from each other and generally interact via the communication network. A relationship between the client and the server is generated through computer programs that run on a corresponding computer and have a client-server relationship with each other.

It should be understood that the steps can be reordered, added, or deleted by using the various forms of processes shown above. For example, the steps described in the present disclosure may be executed in parallel or sequentially or in different sequences, provided that the desired results of the technical solutions disclosed in the present disclosure can be achieved, which are not limited herein.

The above specific implementation mode does not limit the extent of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the extent of protection of the present disclosure.

## Claims

1. A method for monitoring an economic state, wherein the method comprises:

acquiring (201), | from map application data, geographic location point active data in a to-be-monitored future time frame and N historical time frames before the to-be-monitored time frame respectively for a to-be-monitored region, the N being a positive integer; and
inputting (202) feature vectors of the geographic location point active data in the to-be-monitored time frame and the N historical time frames before the to-be-monitored time frame into a pre-trained economic state monitoring model, to obtain economic indicator data of the to-be-monitored region in the to-be-monitored time frame.

2. The method according to claim 1, wherein the economic state monitoring model uses a time series model to establish a strong correlation between time distribution of the geographic location point active data and time distribution of the economic indicator data.

3. The method according to claim 2, wherein the economic state monitoring model comprises: an input layer, an embedded layer and a prediction layer;
the input layer is configured to output representations of the feature vectors of the geographic location point active data in the to-be-monitored time frame and the N historical time frames before the to-be-monitored time frame to the embedded layer;
the embedded layer is configured to weight an inputted feature vector $x_i$| of geographic location point active data in the $i^{th}$ time frame and an embedded layer vector $h_{i-1}$| corresponding to the $i\text{-}1^{th}$ time frame to obtain an embedded layer vector $h_i$| corresponding to the $i^{th}$ time frame, wherein the $i^{th}$ time frame is sequentially taken from the time periods from the N historical time frames before the to-be-monitored time frame to the to-be-monitored time frame; and
the prediction layer is configured to obtain the economic indicator data in the to-be-monitored time frame by mapping according to the embedded layer vector corresponding to the to-be-monitored time frame.

4. The method according to any one of claims 1 to 3, wherein the geographic location point active data comprises at least one of the following:

data of users' access to commercial geographic location points, data of newly added commercial geographic location points, data of the users' query of the commercial geographic location points and data of valid commercial geographic location points; and
the economic indicator data comprises at least one of the following:
Gross Domestic Product (GDP), purchasing managers index (PMI) and consumer price index (CPI).

5. The method according to any one of claims 1 to 3, wherein the geographic location point active data is geographic location point active data of a geographic location point type corresponding to a particular industry; and
the economic indicator data obtained is economic indicator data for the particular industry.

6. A method for establishing an economic state monitoring model, wherein the method comprises:

acquiring (401), from map application data, geographic location point active data in M consecutive time frames respectively for a to-be-monitored region; and acquiring, from an economic indicator database, actual economic indicator data of the to-be-monitored region in the M time frames respectively, the M being a positive integer greater than 1; and
training (402) a time series model by taking the acquired geographic location point active data and actual economic indicator data in the M consecutive time frames as training data, to obtain an economic state monitoring model for the to-be-monitored region;
the economic state monitoring model being configured to output, according to geographic location point active data of the to-be-monitored region in a to-be-monitored future time frame and N historical time frames before the to-be-monitored time frame, economic indicator data of to-be-monitored region in the to-be-monitored time frame, the N being a positive integer, the M>N.

7. The method according to claim 6, wherein the economic state monitoring model learns a strong correlation between time distribution of the geographic location point active data and time distribution of the economic indicator data during the training.

8. The method according to claim 6, wherein the economic state monitoring model comprises: an input layer, an embedded layer and a prediction layer;

the input layer is configured to output feature vectors of the geographic location point active data in the time frames in the training data to the embedded layer;

the embedded layer is configured to weight an inputted feature vector $x_i|$ of geographic location point active data in the $i^{th}$ time frame and an embedded layer vector $h_{i-1}|$ corresponding to the $i$-$1^{th}$ time frame to obtain an embedded layer vector $h_i|$ corresponding to the $i^{th}$ time frame, wherein the $i^{th}$ time frame is sequentially taken from the time frames in the training data in chronological order; and

the prediction layer is configured to obtain economic indicator data in the $i^{th}$ time frame by mapping according to the embedded layer vector $h_i|$ corresponding to the $i^{th}$ time frame; and

a training goal of the economic state monitoring model is to minimize a difference between the economic indicator data obtained by the prediction layer and the corresponding actual economic indicator data in the training data.

9. The method according to any one of claims 6 to 8, wherein the geographic location point active data comprises at least one of the following:

data of users' access to commercial geographic location points, data of newly added commercial geographic location points, data of the users' query of the commercial geographic location points and data of valid commercial geographic location points; and

the economic indicator data comprises at least one of the following:

Gross Domestic Product (GDP), purchasing managers index (PMI) and consumer price index (CPI).

10. An apparatus for monitoring an economic state, wherein the apparatus comprises:

a data acquisition unit (01) configured to acquire, from map application data, geographic location point active data in a to-be-monitored future time frame and N historical time frames before the to-be-monitored time frame respectively for a to-be-monitored region, the N being a positive integer; and

a monitoring processing unit (02) configured to input feature vectors of the geographic location point active data in the to-be-monitored time frame and the N historical time frames before the to-be-monitored time frame into a pre-trained economic state monitoring model, to obtain economic indicator data of the to-be-monitored region in the to-be-monitored time frame.

11. The apparatus according to claim 10, wherein the economic state monitoring model uses a time series model to establish a strong correlation between time distribution of the geographic location point active data and time distribution of the economic indicator data.

12. An apparatus for establishing an economic state monitoring model, wherein the apparatus comprises:

a data acquisition unit (11) configured to acquire, from map application data, geographic location point active data in M consecutive time frames respectively for a to-be-monitored region; and acquire, from an economic indicator database, actual economic indicator data of the to-be-monitored region in the M time frames respectively, the M being a positive integer greater than 1; and

a model training unit (12) configured to train a time series model by taking the acquired geographic location point active data and actual economic indicator data in the M consecutive time frames as training data, to obtain an economic state monitoring model for the to-be-monitored region;

the economic state monitoring model being configured to output, according to geographic location point active data of the to-be-monitored region in a to-be-monitored future time frame and N historical time frames before the to-be-monitored time frame, economic indicator data of to-be-monitored region in the to-be-monitored time frame, the N being a positive integer, the M>N.

13. An electronic device, comprising:

at least one processor; and

a memory in a communication connection with the at least one processor, wherein

the memory stores instructions executable by the at least one processor, and the instructions are executed by the at least one processor to enable the at least one processor to perform the method according to any one of claims 1 to 9.

**14.** A non-transitory computer-readable memory medium that stores computer instructions, wherein the computer instructions are used to make the computer perform the method according to any one of claims 1 to 9.

**15.** A computer program product comprising instructions which, when the program is executed by a computer, cause the computer to perform the method according to any one of claims 1 to 9.

FIG. 1

FIG. 2

Output
layer

$y_t$

Embedded
layer

$h_{t-N}$

e

$h_{t-2}$

$(1-\lambda_{t-1})$

$h_{t-1}$

$(1-\lambda_t)$

$h_t$

$\lambda_{t-N}$

e

$\lambda_{t-2}$

$\lambda_{t-1}$

$\lambda_t$

Input
layer

$x_{t-N}$

$x_{t-2}$

$x_{t-1}$

$x_t$

FIG. 3

401

Acquire, from map application data, geographic location point active data in M consecutive time frames respectively for a to-be-monitored region; and acquire, from an economic indicator database, actual economic indicator data of the to-be-monitored region in the M time frames respectively

402

Train a time series model by taking the acquired geographic location point active data and actual economic indicator data in the M consecutive time frames as training data, to obtain an economic state monitoring model for the to-be-monitored region

FIG. 4

FIG. 5

FIG. 6

Map application
data

Data acquisition
unit
11

Model training unit
12

Economic state
monitoring model

FIG. 7

Processor
801

Input device
803

Bus

Program

Memory
802

Output device
804

FIG. 8